# EUROPÄISCHE PATENTSCHRIFT

(11) **EP 2 636 720 B1**
(45) Veröffentlichungstag und Bekanntmachung des Hinweises auf die Patenterteilung: **28.09.2016**
(21) Anmeldenummer: 13000825.3
(22) Anmeldetag: 19.02.2013
(51) Int. Cl.: C10J 3/00, C10J 3/10, C10J 3/66, C10B 47/44

(54) **Verfahren und Vorrichtung für die Vergasung von feuchter Biomasse mit einem Kompaktvergaser**
Method and apparatus for the gasification of wet biomass with a compact gasification device
Procédé et dispositif pour le gazage de biomasse humide à l'aide d'un gazéificateur compact

(30) Priorität: 06.03.2012 DE 102012004632
(43) Veröffentlichungstag der Anmeldung: 11.09.2013
(73) Patentinhaber: Finger, Ulrich, 87754 Kammlach (DE)
(72) Erfinder: Finger, Ulrich, 87754 Kammlach (DE)
(74) Vertreter: Beier, Ralph

(56) Entgegenhaltungen:
- EP-A2- 0 948 992
- WO-A1-2009/025569
- DE-A1- 2 752 609
- JP-A- 2006 274 201
- US-A- 4 501 644

## Beschreibung

Eine Möglichkeit für die Nachhaltigkeit der Energieerzeugung ist der Anbau von schnellwachsenden Energiepflanzen wie Miscantus, Pappeln oder Blauglocken-Bäumen. (Paulownia ) Gerade diese Baumart ist besonders für die nachhaltige Energieerzeugung geeignet, da sie einen Ertrag von bis zu 25T/ha bei einem Heizwert von 19,6 MJ/kg erzeugt. Außerdem besitzt das Holz einen sehr geringen Ligningehalt und ist daher für die Vergasung besonders geeignet, da Lignin die Vorstufe für Essigsäure ist und daher bei der Vergasung ein geringer Teergehalt im erzeugten Synthesegas zu erwarten ist.

Zum Stand der Technik ist zunächst hinzuweisen auf WO 2009/025569 A1 und JP 2006 274201 A.

Schließlich ist aus US 4 501 644 A ein Vergaser gemäß dem Oberbegriff von Anspruch 1 bekannt. Hierbei tritt am Ende der Feuerung jedoch nur Asche aus. Es ist dagegen mit diesem bekannten Vergaser nicht möglich, mittels der Feuerung auch Holzkohle zu erzeugen.

Der Erfindung liegt deshalb die Aufgabe zugrunde, einen entsprechend verbesserten Vergaser zu schaffen, der am Ende der Feuerung auch Holzkohle ausgeben kann.

Diese Aufgabe wird durch einen Vergaser gemäß Anspruch 1 gelöst.

Durch die Entwicklung des Kompaktvergasers für feuchte Biomasse ist es möglich, die Pflanzen mechanisch zu ernten, da im Kompaktvergaser das gesamte Material bestehend aus dem Stamm, den Ästen, den Blättern und den Früchten vergast werden kann.

Die max. Daumennagel großen Hackschnitzel werden dem Materialbehälter (1) über eine Zellenradschleuse zugeführt. Zwei gegenläufige Trocknungsschnecken (2) unterhalb des Behälters (1) werden durch die Rauchgase der Feuerung (11) beheizt und transportieren das Material zum Schneckenende, wo es an die Pyrolyseschnecken (2) übergeben wird. Auch diese Schnecken werden von den Rauchgasen aus der Feuerung (11) von außen beheizt.

Neben dem Materialbehälter (1) befinden sich zwei Fallschächte (3) über die das pyrolysierte Material in die darunterliegenden Vergaser Spiralen(4) fallen. Diese Spiralen besitzen Paddeln, mit denen das Material im Wirbelschicht-Verfahren in den Rohren (**4**) bewegt wird. Am Ende der Spiralen (**4**) übergeben diese das zur Holzkohle entgaste Material an die Mittelspirale (**5**), Die nicht vollständig vergaste Holzkohle fällt durch eine Zellenradschleuse in den Schacht (**9**) und die Stockerschnecke (**10)**, damit sie der Feuerung (**11**) wieder zugeführt wird.

Das erzeugte Synthesegas entweicht nach oben aus dem Mittelrohr (**5**) und gelangt mit der Rohrleitung (**20**) von unten in das Etagenholzkohlenfilter (**16**). Durch die Kaskadenanordnung der einzelnen Etagen, wird das Synthesegas gezwungen, durch die eigenerzeugte Holzkohle zu strömen. Dabei wird das Synthesegas abgekühlt und gereinigt. Da das erzeugte Synthesegas durch die Feuchtigkeit des Inputmaterials einen hohen Wasserstoffanteil besitzt, kommt es in dem Holzkohlenfilter zu einer chemischen Reaktion, da sich zwei Wasserstoffanteile mit einem Kohlenstoffanteil zu Methan verbindet. ( **C** + **H²**- **H²** = **CH4**) Methan hat einen wesentlich höheren Energiegehalt als Wasserstoff. Im oberen Bereich des Filters (**16**) befindet sich ein Gassammler (**19**) vom dem aus das Synthesegas zur Energieerzeugung entnommen wird.

Der Vorteil der stufenlos verstellbarem Vorschubrost-Feuerung besteht darin, dass der Abbrand des Materials so eingestellt werden kann, damit am Ende der Feuerung nicht nur Asche sondern auch Holzkohle mit der Schnecke (**12**) ausgetragen werden kann. Mit der Steigschnecke (**15**) gelangt die Holzkohle in das Etagenfilter (**16**), wobei vorher über ein Sieb (**13**) die Asche ausgesiebt wird und über eine Zellenradschleuse in die Aschetonne (**14**) gelangt.

Die von oben in das Etagenfilter (**16**) eingefüllte Holzkohle durchwandert die einzelnen Etagen, in dem sie mit rotierenden Paddelarmen um jeweils 300° in die nächste Öffnung geschoben wird und in die darunterliegende Etage fällt. Die Paddelarme sind mit Öffnungen ausgestattet, damit das im Gegenstrom fließende Synthesegas durchströmen kann. Durch diese Anordnung wird das Synthesegas abgekühlt und gereinigt. Die am unteren Ende des Etagenfilters (**16**) ausgetragene erwärmte und belastete Holzkohle wird durch eine Zellenradschleuse und der Schnecke (**8**) der Stockerschnecke (**10**) zugeführt. Gemeinsam mit dem Frischmaterial aus dem Materialschacht (**7**) und dem Schacht (**9**) wird die belastete Holzkohle aus (**8**) mit der Stockerschnecke (**10**) in die Feuerung geschoben und verbrannt.

Außer der Asche aus der Aschetonne (**14**), die als Mineraldünner wieder verwendet werden kann, entstehen bei diesem Verfahren keinerlei Reststoffe für die Entsorgung.

### Aufstellung der Positionen:

1) Materialbehälter
2) Schneckenpaare
3) Fallschacht
4) Umwälzspiralen
5) Austragspirale
6) Antriebskasten
7) Materialschacht
8) Holzkohlenschnecke
9) Restholzkohlenschacht
10) Stockerschnecke
11) Vorschubrost
12) Ascheaustragung
13) Siebschnecke
14) Aschetonne
15) Steigschnecke
16) Etagenholzkohlenfilter
17) Gassammler
18) Verteilersilo
19) Rauchgasrohr
20) Gasleitung

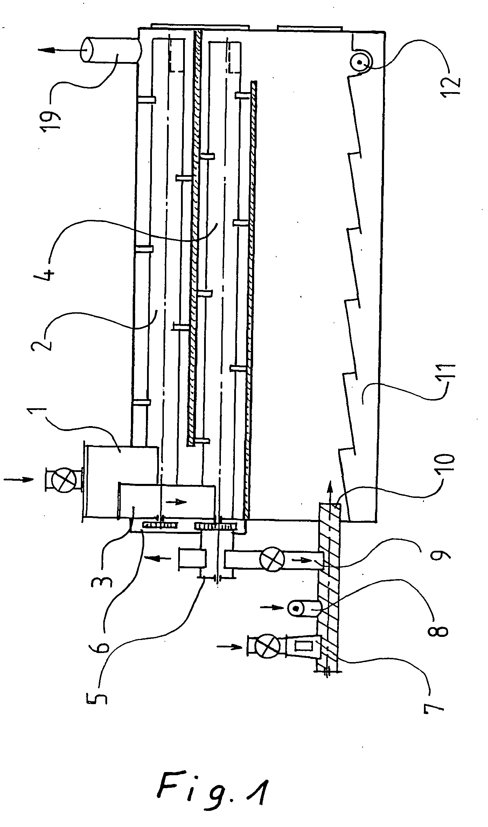

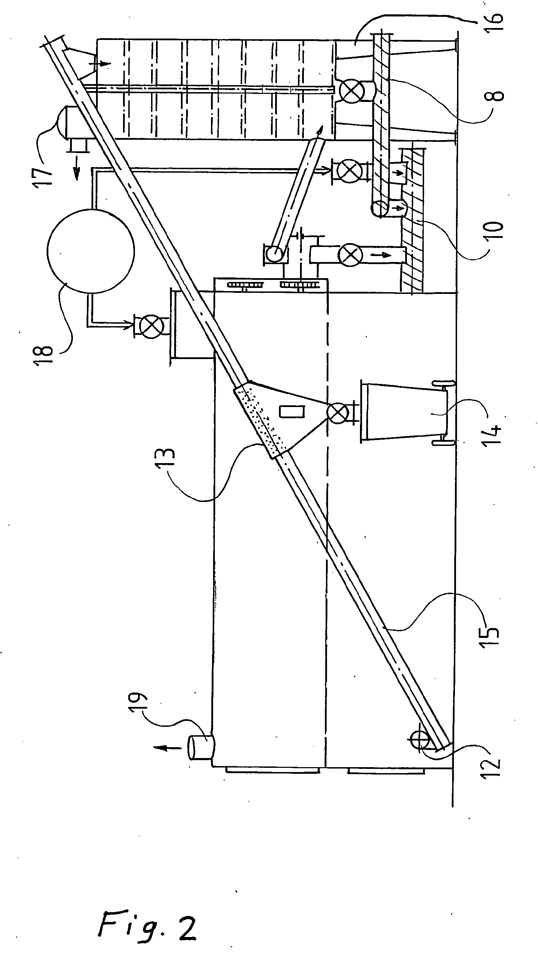

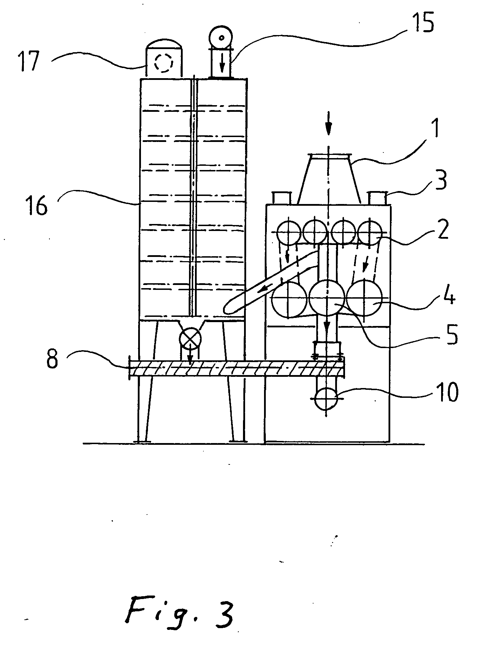

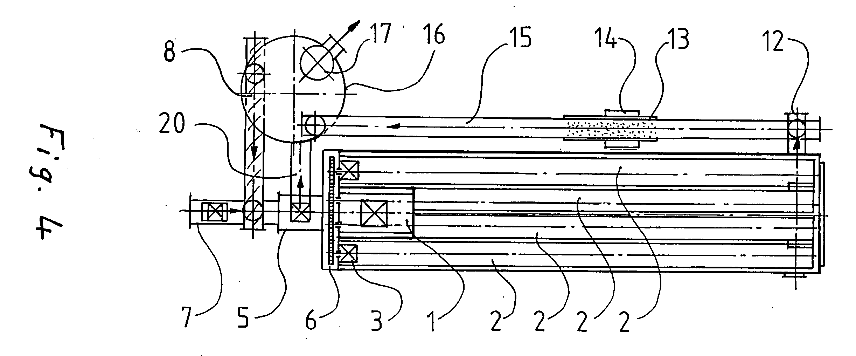

## Patentansprüche

1. Vorrichtung für die Vergasung von kleiner, feuchter Biomasse, mit
a) einer Feuerung (11) zur Erzeugung von Rauchgasen, wobei die Feuerung (11) aus einem Vorschubrost besteht und
b) Trocknungsschnecken (2) , die durch die Rauchgase aus der Feuerung (11) von außen beheizt werden, so dass durch die Trocknung Wasserdampf entsteht,
**dadurch gekennzeichnet,**
c) **dass** die Vorschubgeschwindigkeit über eine Hydraulik so einstellbar ist, dass am Ende der Feuerung (11) sowohl Asche als auch nichtverbrannte Holzkohle ausgetragen wird.

## Claims

1. Device for gasification of small, moist biomass, with
a) a furnace (11) for generating flue gases, wherein the furnace (11) consists of a feeder grate, and
b) drying screws (2) which are heated by the flues gases from the furnace (11) from outside, so that water vapour is generated due to the drying,
**characterized in that**
c) the feeding rate of the furnace (11) is adjustable by hydraulics, so that ash as well as non-burnt charcoal is discharged at the end of the furnace (11).

## Revendications

1. Dispositif pour la gazéification de matières organiques, de petites humides avec
a) un four (11) pour produire des gaz de combustion, ledit four (11) consiste en une grille d'alimentation, et
b) le séchage de vis sans fin (2), qui sont chauffés par les gaz de combustion provenant du four (11) depuis l'extérieur, de sorte que la vapeur d'eau produite par le séchage,
**caractérisé en ce**
c) **que** les contrôles de débit d'alimentation par une hydraulique qui, à la fin de four (11) cendres et charbon imbrûlé est déchargé.
